# EUROPÄISCHE PATENTANMELDUNG

(11) **EP 4 086 799 A1**
(43) Veröffentlichungstag der Anmeldung: **09.11.2022**
(21) Anmeldenummer: 22171993.3
(22) Anmeldetag: 06.05.2022
(51) Int. Cl.: G06F 21/64, G06Q 10/06, G06Q 10/08, G06Q 50/12

(54) **SYSTEM UND VERFAHREN ZUR RECHTSSICHEREN DOKUMENTATION VON GESUNDHEITS- UND SICHERHEITSRELEVANTEN PROZESSEREIGNISSEN**

(30) Priorität: 07.05.2021 DE 102021111934
(71) Anmelder: Francotyp-Postalia GmbH, 13089 Berlin (DE)
(72) Erfinder: HÜBLER, Uwe, 15366 Neuenhagen (DE); HEINRICH, Clemens, 16515 Oranienburg (DE); GÜNTHER, Stephan, 16548 Glienicke (DE)
(74) Vertreter: Hertin und Partner Rechts- und Patentanwälte PartG mbB

(57) **Zusammenfassung**

Die Erfindung betrifft ein System und ein Verfahren zur rechtssicheren Dokumentation von gesundheits- und sicherheitsrelevanten Prozessereignissen in einer Anlage zur Verarbeitung von Lebensmitteln. Das System umfasst dabei eine Arbeitsstation, eine Erfassungseinrichtung, eine Auditoreinrichtung, einen Berichtsgenerator und eine Signiereinrichtung. Die Erfassungseinrichtung ist der Arbeitsstation zugeordnet und dazu eingerichtet, anlagenbezogene Prozessgrößen automatisiert aufzunehmen. Die Auditoreinrichtung ist hingegen dazu konfiguriert, die aufgenommenen Prozessgrößen zu analysieren und ein Auslösungsereignis zu erkennen.

Weiterhin ist die Auditoreinrichtung in der Lage, einen ersten Datensatz mit mindestens einer der aufgenommenen Prozessgrößen und/oder einem Informationswert über das Auslösungsereignis zu generieren. Der Berichtsgenerator ist dazu eingerichtet, eine für den ersten Datensatz zuständige Signiereinrichtung zu ermitteln. Zudem kann der Berichtsgenerator einen Anforderungsdatensatz erstellen, welcher eine Signaturanforderung und mindestens einen Teil des ersten Datensatzes umfasst. Dieser Anforderungsdatensatz kann an die zuständige Signiereinrichtung übertragen werden. Die Signiereinrichtung ist dazu eingerichtet, einen Antwortdatensatz zu erzeugen, welcher eine elektronische Signatur über mindestens einen Teil des Anforderungsdatensatzes umfasst.

## Beschreibung

### BESCHREIBUNG

Die Erfindung betrifft ein System und ein Verfahren zur rechtssicheren Dokumentation von gesundheits- und sicherheitsrelevanten Prozessereignissen in einer Anlage zur Verarbeitung von Lebensmitteln. Das System umfasst dabei eine Arbeitsstation, eine Erfassungseinrichtung, eine Auditoreinrichtung, einen Berichtsgenerator und eine Signiereinrichtung. Die Erfassungseinrichtung ist der Arbeitsstation zugeordnet und dazu eingerichtet, anlagenbezogene Prozessgrößen automatisiert aufzunehmen. Die Auditoreinrichtung ist hingegen dazu konfiguriert, die aufgenommenen Prozessgrößen zu analysieren und ein Auslösungsereignis zu erkennen. Weiterhin ist die Auditoreinrichtung in der Lage, einen ersten Datensatz zu generieren, welcher die aufgenommenen Prozessgrößen und/oder einen Informationswert über das Auslösungsereignis umfasst. Die Auditoreinrichtung kann diesen Datensatz an den Berichtsgenerator übermitteln. Der Berichtsgenerator wiederum ist dazu eingerichtet, eine für den ersten Datensatz zuständige Signiereinrichtung zu ermitteln. Weiterhin kann der Berichtsgenerator einen Anforderungsdatensatz erstellen, welcher eine Signaturanforderung und mindestens einen Teil des ersten Datensatzes umfasst. Dieser Anforderungsdatensatz kann an die zuständige Signiereinrichtung übertragen werden. Die Signiereinrichtung ist dazu eingerichtet, einen Antwortdatensatz zu erzeugen, welcher eine elektronische Signatur über mindestens einen Teil des Anforderungsdatensatzes umfasst.

### Hintergrund und Stand der Technik

Im Stand der Technik sind Prozess- und Anlagensteuerung über das Internet hinlänglich bekannt. Sogenannte loT-Systeme (Internet of Things) ermöglichen es, einem Nutzer/Anwender ferngesteuert bzw. remote Prozesse und Anlagen anhand deren Betriebs- und Zustandsparametern zu überwachen und auch zu steuern.

Es ist derzeit jedoch sehr aufwändig und kostenintensiv, bei auftretenden Fehlfunktionen oder Ausnahmezuständen sowie unerwartet eintretenden Ereignissen, die ein loT-System betreffen können, eine eindeutig definierte, rechtssichere Dokumentation der jeweils erforderlichen Informations- und Fehlerbehebungsaktionen zu erzeugen. Es liegt daher ein großer Bedarf an einer Lösung zur Behebung dieses Mangels vor.

Insbesondere in Anlagen zur Verarbeitung von Lebensmitteln existieren eine Vielzahl unterschiedlicher gesundheits- und damit sicherheitsrelevanter Prozesse, die zu überwachen und zu dokumentieren sind. Es sind beispielsweise alle Prozesse um eine Speisenanlieferung, - aufbewahrung, -verarbeitung und -entsorgung betroffen. Ferner sind auch Hygieneprozesse zu überwachen, wie z.B. Reinigungszyklen von Sanitäreinrichtungen über Desinfektionsmaßnahmen für Mitarbeiter bis hin zu Bekleidungsschutzmaßnahmen.

Die automatisierte Erfassung von einzelnen Prozessgrößen wie z.B. Kühl- oder auch Gartemperaturen über Sensoren, Reinigungszyklen oder Desinfektionsvorgänge per Nahfeldkommunikation (NFC auf RFID Basis) oder auch Zugangsüberwachung mit Hilfe von Chipkartenlesung einzelner Arbeitsstationen sind im Stand der Technik bekannt. So existieren zum Beispiel ("smarte") Kühlschränke, welche Kühltemperaturen aufnehmen und Beladungssituationen erfassen können.

Allerdings fehlt es an einem System und/oder Verfahren, welches die aufgenommenen Parameter einzelner Arbeitsstationen in einer Anlage zur Verarbeitung von Lebensmitteln zentral verarbeitet, automatisiert analysiert sowie insbesondere eine automatische rechtssichere Informationsweitergabe an verantwortliche Personen/Stellen bei auftretenden Über-/Unterschreitungen kritischer Prozessparameter gewährleistet, sodass eine entsprechende Reaktion durch diese Stellen/Personen ermöglicht wird und im Nachhinein eindeutig dokumentiert wird, wie der Informationsfluss zeitlich und inhaltlich abgelaufen ist.

### Aufgabe der Erfindung

Die Aufgabe der Erfindung war es daher die Nachteile aus dem Stand der Technik zu beseitigen und ein kostengünstiges sowie automatisiertes System und Verfahren zur rechtssicheren Dokumentation von gesundheits- und sicherheitsrelevanten Prozessereignissen in einer Anlage zur Verarbeitung von Lebensmitteln bereitzustellen.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung ein System zur rechtssicheren Dokumentation von gesundheits- und sicherheitsrelevanten Prozessereignissen in einer Anlage zur Verarbeitung von Lebensmitteln, wobei das System mindestens eine Arbeitsstation, eine Erfassungseinrichtung, eine Auditoreinrichtung, einen Berichtsgenerator und eine Signiereinrichtung umfasst, dadurch gekennzeichnet, dass
a) die Erfassungseinrichtung der Arbeitsstation zugeordnet ist und dazu eingerichtet ist, anlagenbezogene Prozessgrößen automatisiert aufzunehmen;
b) die Auditoreinrichtung dazu eingerichtet ist,
   (i) die aufgenommenen Prozessgrößen zu analysieren und ein Auslösungsereignis zu erkennen;
   (ii) einen ersten Datensatz zu generieren, wobei der erste Datensatz mindestens eine der aufgenommenen Prozessgrößen und/oder einen Informationswert über das Auslösungsereignis umfasst;
   (iii) den ersten Datensatz an den Berichtsgenerator zu übermitteln;
c) der Berichtsgenerator dazu eingerichtet ist,
   (i) eine für den ersten Datensatz zuständige Signiereinrichtung zu ermitteln, wobei die zuständige Signiereinrichtung auf Basis des im Datensatz umfassten Informationswertes über das Auslösungsereignis und/oder auf Basis einer im ersten Datensatz umfassten Prozessgröße und/oder auf Basis einer Auswertung der erhaltenen Informationswerte und/oder Prozessgrößen ermittelt wird;
   (ii) einen Anforderungsdatensatz an die dem ersten Datensatz zugeordnete Signiereinrichtung zu übermitteln, wobei der Anforderungsdatensatz eine Signaturanforderung und mindestens einen Teil des ersten Datensatzes umfasst;
d) die Signiereinrichtung dazu eingerichtet ist,
   (i) einen Antwortdatensatz zu erzeugen, der eine elektronische Signatur über mindestens einen Teil des Anforderungsdatensatzes umfasst.

Ein derartiges System zur Lösung der oben genannten Aufgabe ist aus dem Stand der Technik weder bekannt noch einem durchschnittlichen Fachmann nahegelegt. Das erfindungsgemäße System ist vielmehr als eine Abkehr vom Stand der Technik anzusehen, in welchem insbesondere einzelne Arbeitsstationen bzw. deren aufgenommene Prozessgrößen ausschließlich einer Einzelbetrachtung unterzogen werden und häufig manuelle Überwachungs-, Analyse-, Übertragungs- und/oder Bearbeitungsschritte miteinbezogen werden müssen. Wohingegen das erfindungsgemäße System die Möglichkeit bietet, ein voll automatisch ausgeführtes System zur rechtssicheren Dokumentation - ausgehend von der Aufnahme von Prozessgrößen bis hin zur Übermittlung von relevanten Prozessinformationen an eine verantwortliche Entität, zum Beispiel Personen oder anderweitige Stellen - bereitzustellen. Das System bietet vor allem auch die Möglichkeit eine besonders sichere (in Bezug auf eine Manipulation) Dokumentation von gesundheits- und sicherheitsrelevanten Prozessereignissen bereitzustellen.

Vorteilhaft wird durch das erfindungsgemäße System eine Ableitung von Fehlerquellen auf Basis von vorhandenen Prozessinformationen und damit eine Schaffung von Möglichkeiten zu deren Behebung ermöglicht. Neben normalen Statusberichten können besonders vorteilhaft relevante Prozessvorkommnisse, d.h. z.B. Abweichungen von definierten Vorgaben wie minimale Gartemperaturen oder maximale Lagertemperaturen oder auch Unterschreitung von vorgegebenen Reinigungszyklen, automatisiert über das erfindungsgemäße digitale Unterschriftsverfahren und -system mit manipulationssicherem Zeitstempel an definierte Personen/Stellen gemeldet werden und eine Quittierung mit rechtskonformer digitaler Unterschrift (Signatur) erfolgen. Damit ist weiterhin jederzeit nachvollziehbar, welche Art von Abweichungen oder Ausfällen zu welcher Zeit aufgetreten sind und welche Personen darüber informiert wurden. Auf diese Weise vereinfacht sich sowohl die Ursachenforschung als auch die Fehlerbehebung signifikant und es können evtl. vorhandene Prozessdefekte oder auch akute Ausfälle behoben werden. Die Unterschriftserfordernisse können dabei an Prozessinhalte bzw. an die Art der Prozessabweichungen geknüpft sein, so dass z.B. von Verstößen von Personen gegen Zutrittsregeln in der erfindungsgemäßen Anlage und/oder Arbeitsstation neben einem Arbeitssicherheitsbeauftragten auch die Personalabteilung eines Unternehmens Kenntnis erlangt.

Im Sinne der Erfindung ist unter einer Anlage zur Verarbeitung von Lebensmitteln bevorzugt eine Küche, insbesondere eine Großküche, zu verstehen, wobei die Anlage bevorzugt mindestens eine Arbeitsstation, stärker bevorzugt eine Vielzahl von Arbeitsstationen, aufweist. Es versteht sich, dass unter den allg. Begriff "Küche" auch kleine Küchen für Privathaushalte fallen.

Als Großküche wird hingegen bevorzugt eine größere Küche für den gewerblichen Einsatz bezeichnet, vornehmlich in der Gastronomie und der Gemeinschaftsverpflegung (Krankenhaus-, Werksküche, Mensa). Sie kann zum Beispiel ausgestaltet sein als eine großflächige Küche etwa eines Hotels oder einer Kantine, in der regelmäßige Speisen für eine größere Zahl von Personen gekocht werden, oder als ein Unternehmen, das für Großabnehmer Essen zubereitet und liefert (Catering). Bevorzugt werden täglich mindestens 10 - 250 Essen, stärker bevorzugt mindestens 25 - 150 Essen und insbesondere mindestens 50 - 100 Essen in einer Großküche hergestellt und diese entweder vor Ort abgegeben oder an andere Ausgabestellen geliefert.

Weiterhin kann unter einer Anlage zur Verarbeitung von Lebensmitteln bevorzugt auch eine Anlage in der Lebensmittelindustrie zu verstehen sein. So kann zum Beispiel eine derartige Anlage als eine Fleischerei, Metzgerei, Bäckerei oder als Anlage zur Herstellung von Fertiggerichten (Convenience-Produkte), Brauerei, Weinerei oder als Anlage zur Herstellung von Ausgangs-, Rohmaterialien oder Zusatz-, Ergänzungs-, oder Veredelungsstoffen als Vorstufen zur Lebensmittelherstellung ausgestaltet sein.

In einer bevorzugten Ausführungsform ist eine Arbeitsstation eine Vorrichtung, die dazu eingerichtet ist, einen anlagenbezogenen Prozess auszuüben. Dieser Prozess kann sich dabei in der Verarbeitung, Bearbeitung, Veränderung, Lagerung, dem Transport von Lebensmitteln widmen. In einer alternativen Ausführungsform ist die Arbeitsstation hingegen bevorzugt dazu eingerichtet, Prozesse im Kontext von Hygiene und Reinigung auszuführen.

Es ist im Sinne der Erfindung bevorzugt, dass die Erfassungseinrichtung mindestens einen Sensor oder ein Sensorsystem umfasst. Ein Sensor kann physikalische (z.B. Wärmemenge, Temperatur, Feuchtigkeit, Druck, Schallfeldgrößen, Helligkeit, Beschleunigung) oder chemische (z. B. pH-Wert, lonenstärke, elektrochemisches Potential, Analysemethoden, wie z.B. spektral- oder mikrobiologisch) Eigenschaften und/oder die stoffliche Beschaffenheit seiner Umgebung qualitativ oder als Messgröße quantitativ ermitteln. Diese Größen werden mittels physikalischer oder chemischer Effekte erfasst und in ein weiter verarbeitbares elektrisches Signal umgewandelt. In einer bevorzugten Ausgestaltung umfasst die Erfassungseinrichtung einen Sensor ausgewählt aus der Gruppe umfassend: Temperatursensor, Wegsensor, Drucksensor (Kraftsensor), Beschleunigungssensor, Bildsensor, Berührungssensor, Feuchtesensor, GPS-Sensor, NFC-Sensor, RFID-Sensor, Analysesensor, Luftgütesensor.

Die Sensoren der Erfassungseinrichtung sind dazu eingerichtet, anlagenbezogene Prozessgrößen automatisch zu erfassen, welche bevorzugt eine Zustandsinformation der zu verarbeitenden Lebensmittel sowie der Arbeitsstation und/oder eine Betriebsinformation der Arbeitsstation umfassen. Die Kombination aus allen Informationen ergeben bevorzugt eine umfassende Gesamtinformation, aus der insbesondere sehr detaillierte Erkenntnisse über die Anlage zur Verarbeitung von Lebensmitteln sowie deren umfasste Komponenten bzw. Arbeitsstationen und den zu verarbeitenden Lebensmitteln gewonnen werden.

Die Erfassungseinrichtung kann im Sinne der Erfindung auch in mehrere Erfassungseinrichtungen unterteilt werden, wobei die jeweiligen Erfassungseinrichtungen unterschiedliche Sensoren umfassen. In einer bevorzugten Ausführungsform umfasst die Erfassungseinrichtung einen Speicher und einen Prozessor. Dadurch kann die Erfassungseinrichtung die erfassten Informationen einer Vorbearbeitung unterziehen. Dies kann beispielsweise eine erste Analyse oder eine Filterung der aufgenommenen Daten aufweisen, wodurch die Auditoreinrichtung vorteilhaft weniger Leistung zur Datenverarbeitung sowie Speicher benötigt.

Weiterhin bevorzugt ist, dass die Erfassungseinrichtung der Arbeitsstation zugeordnet ist. Hierbei kann die Erfassungseinrichtung zusammen mit der Arbeitsstation als Station der Anlage vorliegen, d.h. bevorzugt kann die Erfassungseinrichtung in der Arbeitsstation integriert vorliegen. Die Erfassungseinrichtung kann jedoch auch separiert von der Arbeitsstation ausgestaltet sein, zum Beispiel als eine tragbare Vorrichtung, und kann je nach Bedarf einer Arbeitsstation zugeordnet werden. Wenn die Erfassungseinrichtung und die Arbeitsstation als eine Einheit in einer Station/Gerät anzusehen sind, so führt das vorteilhafter Weise dazu, dass die Erfassungseinrichtung eine verbesserte Genauigkeit, Reproduzierbarkeit der Messwerte ermöglicht, wobei auf eine regelmäßige Neukalibrierung der Erfassungseinrichtung verzichtet werden kann, da diese bevorzugt positionsfest in Relation zur Arbeitsstation angeordnet vorliegt. Wenn die Arbeitsstation hingegen unabhängig von der Erfassungseinrichtung ausgestaltet ist (die Arbeitsstationen sowie die Erfassungseinrichtung sind jeweils als eigenständige Geräte anzusehen), wird vorteilhaft in einfacher Weise eine variable Zuordnung einer Erfassungseinrichtung zu einer Arbeitsstation ermöglicht, sodass die Erfassungseinrichtung in verschiedenen Arbeitsstationen für jeweils andere Zwecke verwendet werden kann. Beispielsweise kann ein Temperatursensor für eine vorgegebene Zeit eine Gartemperatur in einem Ofen messen und in einem anderen Kontext zur Überwachung von Prozessereignissen kann der Temperatursensor für eine vorgegebene Zeit eine Kühltemperatur in einem Kühlraum erfassen.

Die erfindungsgemäße Auditoreinrichtung ist bevorzugt als eine Datenverarbeitungseinheit zu sehen. Sie umfasst vorzugsweise Mittel zum Erzeugen, Verarbeiten, Speichern, Senden und Empfangen von Daten. Die Auditoreinrichtung steht bevorzugt mit der Erfassungseinrichtung und dem Berichtsgenerator in Datenverbindung, wodurch Daten zwischen diesen Systemkomponenten übertragen werden können. Die Auditoreinrichtung kann auch als physische Einheit mit der Arbeitsstation und der Erfassungseinrichtung ausgeprägt sein, was vorteilhafterweise die Eingriffs- und Manipulationsmöglichkeiten von außen auf das System minimiert. In einer bevorzugten Ausführungsform führt die Auditoreinrichtung Algorithmen und Berechnungen aus, indem sie von den Erfassungseinrichtungen Input-Daten erhält und nach Ausführung der Algorithmen Output-Daten generiert, die bevorzugt an den Berichtsgenerator übertragen werden. Der Vorteil einer solchen Anordnung ist, dass die Erfassungseinrichtung nicht mit Komponenten zur Datenverarbeitung (Prozessor) und Datenspeicherung bestückt werden muss. Ein weiterer Vorteil ist, dass die Auditoreinrichtung für ihre Analyse bzw. Durchführung der Algorithmen eine Vielzahl von aufgenommenen Daten von verschiedenen Erfassungseinrichtungen miteinbeziehen kann, sodass eine weitreichende Analyse ermöglicht wird. Wenn zum Beispiel in einer ersten Verarbeitungsstation (Arbeitsstation 1) das erforderliche Mehl knapp wird - was durch eine zugeordnete Erfassungseinrichtung (Erfassungseinrichtung 1) aufgenommen wird - kann die Auditoreinrichtung automatisiert erkennen, dass in einer weiteren Eingangsprüfungsstation (Arbeitsstation 2) durch aufgenommene Prozessgrößen einer weiteren Erfassungseinrichtung (Erfassungseinrichtung 2) ein Qualitätsmangel des neu angelieferten Mehls besteht und kann folglich veranlassen, dass Reservemehl rechtzeitig aus der Tiefkühlung eines Lagers (Arbeitsstation 3) dem Prozess zugeführt wird.

Anhand der aufgenommenen Prozessgrößen kann die Auditoreinrichtung ein Auslösungsereignis erkennen. Im Sinne der Erfindung ist ein Auslösungsereignis bevorzugt als ein Ereignis zu verstehen, welches eine Diskrepanz zwischen einem tatsächlichen Ereignis und einem eigentlich erwarteten und/oder geplanten Ereignis darstellt, sodass eine Mitteilung an verantwortliche Entitäten (Personen oder Stellen) und/oder eine Handlung erfordert wird. Bevorzugt ist ein Auslösungsereignis auch als ein sogenannter "Trigger" zu verstehen. Ein Auslösungsereignis kann zudem bevorzugt zeitabhängig sein, sodass zum Beispiel bestimmte aufgenommene Prozessparameter als "Meilensteine" in verschiedenen Zeitabständen an verantwortliche Entitäten (Stellen/Personen) gelangen können. Ein Auslösungsereignis kann zum Beispiel eine Über- oder Unterschreitung eines Temperaturschwellenwertes, ausgeschöpfte Lagerkapazitäten, Zutritt nicht berechtigter Personen zu einem Lager, große Rauchentwicklung in einem Raum der Anlage, Mangel an bestimmten Lebensmitteln für geplante Speisen, darstellen. Die Analyse zur Erkennung eines Auslösungsereignissen kann zum Beispiel auf Algorithmen der künstlichen Intelligenz basieren oder aber auch auf einem einfachen Vergleich zwischen aufgenommenen Werten mit Referenzwerten oder anderweitigen Algorithmen.

Ferner ist die Auditoreinrichtung bevorzugt konfiguriert, um einen ersten Datensatz zu generieren. Der erste Datensatz wird bevorzugt als zusammengefasste Daten in Datenbanken oder in Dateien gespeichert. Bevorzugt ist der Datensatz in einem Dateiformat gespeichert ausgesucht aus der Gruppe umfassend PDF, JSON, XML, CSV. PDF-Dateien zeichnen sich durch sehr universelle Verwendbarkeit auf unterschiedlichen Datenverarbeitungssystemen aus, während einer der großen Vorteile von JSON-Dateien die Einfachheit der Implementierung und der Anwendung ist. Aufgrund des einfachen Aufbaus benötigen JSON-Dateien bei der Anwendung nicht viele Ressourcen. So können umfangreiche Daten in einer annehmbaren Zeit ausgewertet werden. Das XML-Format kann vorteilhaft ohne große Aufwendungen an andere Systeme angebunden werden, sodass eine besonders gute Kompatibilität besteht. Für die langfristige Dateiablage ist XML ebenso vorteilhaft geeignet und XML kann zudem einfach in andere Dateiformate gewandelt werden. Das CSV - Dateiformat ist vorteilhaft vielseitig nutzbar. Der große Vorteil des CSV-Formats liegt weiterhin in der leichten Übertragbarkeit, wie zum Beispiel den Import in unterschiedliche Datenbanken oder Programmen. In bereits bestehenden Datenbanken können Inhalte aus CSV-Dateien vielfach eingelesen werden. Es ist insbesondere dann vorteilhaft, wenn unterschiedliche Datenquellen (zum Beispiel Daten aus verschiedenen Erfassungseinrichtung) zu einem einzigen Datenbestand zusammengefasst werden soll.

In einer bevorzugten Ausführungsform werden sensorspezifische Rohdaten und/oder vorbereitete bzw. verarbeitete Rohdaten durch die Erfassungseinrichtung an die Auditoreinrichtung übermittelt, welche diese Daten analysiert und einen Informationswert über anlagenbezogene Prozessgrößen und/oder einem Auslösungsereignis in die oben genannten Dateiformate abspeichert. Es ist demnach möglich, dass die Auditoreinrichtung eine Bilddatei erhält und diese in abstrahierten Informationen, in eine XML oder CSV Datei wandelt. Der Vorteil an diesem Vorgehen ist der, dass die Rohdaten und/oder vorbereiteten bzw. bearbeiteten Rohdaten der Erfassungseinrichtungen in eine Form konvertiert werden, welche eine Vielfach geringere Speicherkapazität benötigen und zusätzlich alle weiteren oben genannten Vorteile der Dateiformate in Anspruch nehmen. Der Informationsverlust durch die Abstraktion führt zu keinen Nachteilen in den weiteren Verfahrensabläufen der vorgeschlagenen Erfindung.

Die zu verwendenden Dateiformate sind nicht unerheblich für das vorgeschlagene System, denn diese haben einen Einfluss auf die Berechnungsgeschwindigkeit, den Speicher sowie die Übertragungsgeschwindigkeit. Die Wechselwirkung der Dateiformate mit der Auditoreinrichtung, dem Berichtsgenerator, der Erfassungseinrichtung und/oder der Signiereinrichtung tragen unter anderem zum technischen Charakter der Erfindung bei. Es hat sich ferner gezeigt, dass insbesondere die anlagenbezogenen Prozessgrößen sowie ein Informationswert über ein Auslösungsereignis besonders gut in vorgenannten Dateiformaten zu speichern sind, ohne relevante Informationsverluste in Kauf nehmen zu müssen.

Der Berichtsgenerator kann dem ersten Datensatz eine Signiereinrichtung zuordnen bzw. eine zuständige Signiereinrichtung ermitteln. Entsprechend umfasst der Berichtsgenerator vorzugsweise Mittel zum Erzeugen, Verarbeiten, Speichern, Senden und Empfangen von Daten. Die Zuordnung erfolgt insbesondere auf Basis des im Datensatz umfassten Informationswertes über das Auslösungsereignis und/oder auf Basis einer im ersten Datensatz umfassten Prozessgröße und/oder auf Basis einer Auswertung der erhaltenen Informationswerte und/oder Prozessgrößen. Hierbei hat der Berichtsgenerator bevorzugt Zugriff auf eine Datenbank, welche alle Signiereinrichtungen mit ihren Adressierungsinformationen umfasst. Diese Datenbank kann entweder auf einem externen Server vorliegen oder im Aufbau des Berichtsgenerators - also in einem Speicher - selbst vorliegen. Bevorzugt wird aus der Datenbank eine zuständige Signiereinrichtung für den Informationswert des ersten Datensatzes ermittelt.

Darüber hinaus kann der Berichtsgenerator die erhaltenden Dateien der Auditoreinrichtung bevorzugt in ein speziell für die zugeordnete Signiereinrichtung lesbares Dateiformat konvertieren. Dies führt vorteilhaft dazu, dass Signiereinrichtungen jeweils als unterschiedliche Endgeräte mit vorzugsweise unterschiedlich auslesbaren Dateiformaten ausgestaltet sein können. Zum Beispiel kann eine sicherheitsrelevante Information, wie bspw. ein ausgebrochenes Feuer in der Anlage zur Verarbeitung von Lebensmitteln einer Signiereinrichtung übermittelt werden, welche zum Beispiel eine Leitstelle für ein Notrufsystem darstellt, wobei diese Leitstelle alle erhaltenden Informationen über einen PC-Desktop erhält. Simultan ermöglicht das vorgeschlagene System, dass eine weitere Entität, eine verantwortliche Person/Stelle (zum Beispiel der verantwortliche Koch), diese Information erhält, wobei ein anderes Endgerät, bspw. ein Smartphone, genutzt wird.

In einer weiteren bevorzugten Ausführungsform ist der Berichtsgenerator einer von der Auditoreinrichtung und der Arbeitsstation örtlich separierten Servereinheit umfasst, wobei der Berichtsgenerator und die Auditoreinrichtung in Datenverbindung zueinanderstehen. Der Vorteil einer solchen Anordnung ist unter anderem darin zu sehen, dass das System dezentral ausgestaltet ist, sodass bei einem Ausfall einzelner Komponenten, wie der Berichtsgenerator und/oder die Auditoreinrichtung, die einzelnen Komponenten für sich genommen ausgetauscht bzw. ersetzt oder repariert werden können, ohne dabei das gesamte System ersetzen zu müssen. Ein Berichtsgenerator, welcher auf einem dezentral angeordneten Server vorliegt, kann vorteilhaft in Datenverbindung mit mehreren Auditoreinrichtungen verschiedener Systeme stehen, sodass sich mehrere erfindungsgemäße Systeme den gleichen Berichtsgenerator "teilen".

In einer weiteren bevorzugten Ausführungsform generiert der Berichtsgenerator einen Anforderungsdatensatz, welcher eine Signaturanforderung und mindestens einen Teil des ersten Datensatzes umfasst. Der Anforderungsdatensatz ist bevorzugt - entsprechend der zugeordneten Signiereinrichtung - in einem Format gespeichert (und wird in diesem übertragen), welches kompatibel zur zugeordneten Signiereinrichtung ist. Die Zuordnung der Signiereinrichtung zu einem Datensatz kann bevorzugt auf Algorithmen der künstlichen Intelligenz erfolgen oder aber auf einem im ersten Datensatz - durch die Auditoreinrichtung eingebrachten - umfassten Zuordnungswert bzw. einer Zuordnungsinformation. In diesem Kontext wird die Zuordnung insbesondere in der Auditoreinrichtung bewerkstelligt, wobei der Berichtsgenerator den Zuordnungswert bzw. die Zuordnungsinformation aus dem ersten Datensatz extrahiert und eine Adressierung für eine Signiereinrichtung ermittelt und darüber hinaus noch einen Anforderungsdatensatz erstellt. Der Anforderungsdatensatz weist bevorzugt eine Signaturanforderung über mindestens einen Teil des ersten Datensatzes auf. Die Signaturanforderung kann bevorzugt ein Maß für die Relevanz des Auslösungsereignisses und/oder der aufgenommenen anlagenbezogenen Prozessgrößen sein. Je relevanter bzw. kritischer eine Information, umso größer ist bevorzugt die Anforderung an eine Signatur.

Eine Signatur ist im Sinne der Erfindung auch als eine elektronische Signatur zu verstehen. Elektronische Signaturen sind bevorzugt mit elektronischen Informationen verknüpfte Daten, mit denen ein Unterzeichner bzw. Signaturersteller identifiziert und die Integrität der signierten elektronischen Informationen geprüft werden kann. In der Regel handelt es sich bei den elektronischen Informationen um elektronische Dokumente. Die elektronische Signatur erfüllt somit technisch gesehen den gleichen Zweck wie eine eigenhändige Unterschrift auf einem Papierdokument.

Eine digitale Signatur wird bevorzugt mittels eines kryptographischen Verfahrens erzeugt, bei dem ein Signierer eines elektronischen Dokuments aus dem Dokument mit einem entsprechenden Algorithmus einen Nachrichtenkern (Hashwert) erzeugt und diesen Nachrichtenkern dann mit seinem privaten Schlüssel (beispielhaft mit einem asymmetrischen Kryptographieverfahren) verschlüsselt, um eine digitale Signatur zu generieren. Die digitale Signatur kann separat gespeichert oder übertragen werden, wird jedoch dann in der Regel in das Dokument eingebettet und zusammen mit dem Dokument übermittelt. Der Empfänger kann aus dem erhaltenen Dokument mit demselben Algorithmus ebenfalls einen Nachrichtenkern (Hashwert) erzeugen und anhand des öffentlichen Schlüssels die Signatur auf Echtheit überprüfen. Die kryptographische (mathematische) Prüfung gegen das Schlüsselpaar beweist den Ursprung (die Identität) des Signierers und ergibt eine Gleichheit der Nachrichtenkerne (Hashwerte).

Digitale Signaturen sind bevorzugt in drei Kategorien einzuteilen, nämlich "einfache elektronische Signatur", "fortgeschrittene elektronische Signatur" und "qualifizierte elektronische Signatur". Die einfache elektronische Signatur hat dabei bevorzugt keine besonderen Anforderungen. Dokumente können ohne Identitätsprüfung oder Zustimmung elektronisch signiert werden. Sie gilt auch ohne Angabe des Urhebers oder Absenders als digitale Signatur. Beispiele für eine solche einfache Signatur sind folgende: PDF mit eingescannter Unterschrift; Unterschrift auf elektronischen Terminals; E-Mail mit Namen. Die fortgeschrittene elektronische Signatur ist hingegen bereits deutlich sicherer. Sie muss strenge Anforderungen der Identitätsprüfung erfüllen und hat folglich eine höhere Beweiskraft als die einfache Signatur. Eine fortgeschrittene elektronische Signatur wird bevorzugt mit einem geheimen Signaturschlüssel erstellt, der eindeutig und nachvollziehbar mit dem Unterzeichner verbunden ist. Den privaten Signaturschlüssel muss der Inhaber unter "alleiniger Kontrolle" haben. Die Identifizierbarkeit des Signaturerstellers erfolgt durch Attribute, die eine Registrierungsstelle für Zertifikate prüfen muss. Die "qualifizierte elektronische Signatur" ist bevorzugt eine elektronische Signatur, die auf einen Zeitpunkt ihrer Erzeugung gültigen qualifizierten Zertifikat beruht und mit einer sicheren und vertrauenswürdigen Signaturerstellungseinheit - zum Beispiel Signaturkarte oder eine Kombination aus Signature Activation Module und HSM - erstellt wurde.

Der Berichtsgenerator sowie die Signiereinrichtung weisen bevorzugt Mittel auf, die eine Nachricht bzw. einen Datensatz und/oder Datei mit einer versehenen Signatur erzeugen und/oder lesen können. Das heißt entsprechende Zertifikate und Algorithmen, wie auch Schlüssel, liegen bevorzugt in einer lokalen Infrastruktur der Systemkomponenten (des Berichtsgenerators und der Signiereinrichtung) vor. Hierbei können Signaturen aller drei Kategorien verwendet werden. Je nach Relevanz des Auslösungsereignisses und/oder der aufgenommenen Prozessgrößen ist von einer hohen oder geringen Anforderung an eine Signatur auszugehen. Der Berichtsgenerator kann bevorzugt durch eine Analyse die Entscheidung der Relevanz selbst treffen, oder diese Entscheidung wird durch die Auditoreinrichtung ermittelt, sodass diese Information mit dem ersten Datensatz an den Berichtsgenerator übermittelt wird. Die Relevanz wird bevorzugt über Algorithmen der künstlichen Intelligenz ermittelt.

Der erfindungsgemäße Berichtsgenerator weist eine Vielzahl von Vorteilen auf, welche so in dieser Art und Weise noch nicht, insbesondere im Kontext einer Anlage zur Verarbeitung von Lebensmitteln, im Stand der Technik bekannt waren. Zum einen stellt der Berichtsgenerator vorteilhaft sicher, dass eine "richtige" Signiereinrichtung für ein spezifisches Auslösungsereignis und/oder Prozessgrößen ausgewählt wird. So wird gewährleistet, dass Informationen ausschließlich an die für diese relevanten Signiereinrichtung, verantwortliche Stellen und/oder Personen, übermittelt werden. Daraus resultierend kann die erhaltene Information von der Signiereinrichtung unmittelbar bearbeitet und signiert werden, ohne die Information unter Umständen weiter leiten zu müssen, weil die Signiereinrichtung nicht verantwortlich für diese Information ist. Ferner ist der Berichtsgenerator bevorzugt in der Lage, für den Informationswert über das Auslösungsereignis und/oder einer Prozessgröße eine bestimmte Relevanz oder Priorisierung zu bestimmen, indem es für die Information einen spezifischen Anforderungsdatensatz mit einer bestimmten Anforderung an eine Sicherheitsstufe und/oder Sicherheitskette erzeugt.

In einer bevorzugten Ausführungsform ist die Signiereinrichtung einer Stelle und/oder Person zugeordnet. Zum Beispiel ist die Stelle eine Einrichtung ausgesucht aus der Gruppe umfassend Notruf-Leitstelle; Krankenhaus; Behörde (Ordnungsamt, Gesundheitsamt, Arbeitsamt); Logistikunternehmen; Entsorgungsunternehmen; unterschiedliche Abteilungen in einem Unternehmen, welches bevorzugt die Anlage zur Verarbeitung von Lebensmitteln betreibt (z.B. Personalabteilung, Geschäftsführung); Zulieferbetrieb. Eine Person kann zum Beispiel in einem Bereich der genannten Stellen arbeiten und/oder Tätigkeiten ausüben, die unmittelbar mit der Anlage zum Verarbeiten von Lebensmitteln in Verbindung stehen, wie zum Beispiel ein Koch, eine Bedienung für Gäste oder eine Reinigungskraft. So kann zum Beispiel einem Kunden bei Bauteilausfällen oder dem Erfordernis von Technikereinsätzen die Möglichkeit zur direkten rechtsverbindlichen Beauftragung mithilfe des beschriebenen Unterschriftsprozesses gegeben werden.

Bevorzugt gelangt die Information über ein Auslösungsereignis und/oder Prozessgrößen an eine der oben genannten für diese Information verantwortliche Stelle und/oder Person. Die Signiereinrichtung ist dabei bevorzugt als ein Endgerät ausgestaltet, ausgesucht aus der Gruppe umfassend: Smartphone, Tablet PC, Desktop-PC, Notebook, Pager, internetfähiges Multimediagerät. Bevorzugt ist das Endgerät eine internetfähige Datenverarbeitungseinheit, welche dazu eingerichtet ist, die Informationen visuell und/oder akustisch unmittelbar darzustellen. Wie eingangs erläutert, kann die Signiereinrichtung bzw. das Endgerät eine elektronische Signatur über mindestens einen Teil des Anforderungsdatensatzes erzeugen. Hierfür weist die Signiereinrichtung bevorzugt Mittel auf, welche eine solche Signatur möglich machen. Hierbei können Zertifikate, Mittel zur Verschlüsselung in lokalen Daten auf dem Endgerät umfasst sein. Es kann in alternativen Ausführungen allerdings ebenso bevorzugt sein, dass die Signiereinrichtung auf einem externen Server, wie eine Cloud, zugreift, um eine Signatur erzeugen zu können.

In einer weiteren bevorzugten Ausführungsform ist das System dadurch gekennzeichnet, dass der Berichtsgenerator dazu eingerichtet ist,
- den Antwortdatensatz an die Auditoreinrichtung und/oder an eine weitere Signiereinrichtung zu übermitteln und/oder den Antwortdatensatz sowie den Anforderungsdatensatz zu speichern;
- bei einer fehlenden Rückmeldung durch einen Antwortdatensatz, nach einem definierten Zeitintervall dem ersten Datensatz eine weitere Signiereinrichtung zuzuordnen.

Das erfindungsgemäße System beansprucht demnach bevorzugt einen Unterschriftsprozess für durch das System als relevant erachtete Informationen. Durch die Speicherung des Antwortdatensatzes sowie des Anforderungsdatensatzes durch den Berichtsgenerator ermöglicht der beschriebene Unterschriftsprozess vorteilhaft eine rechtskonforme Archivierung aller Vorgänge. Wenn der Berichtsgenerator auf einem externen Server vorliegt (und/oder zumindest die Speicherung der Daten auf einem externen Server, wie einer Cloud erfolgt), wird ein nachträglicher Zugriff durch verschiedene - insbesondere eine Vielzahl - von Entitäten ermöglicht. Der Berichtsgenerator übernimmt bevorzugt die Überwachung des Fortschritts in der Signaturkette, sodass bei fehlendem Fortschritt in einem festgelegten Zeitintervall auch alternative Unterschriftsoptionen ermittelt werden können. Darüber hinaus geht mit dem Berichtsgenerator der Vorteil einher, dass in jedem Fall sichergestellt wird, dass die relevante Information über das Auslösungsereignis und/oder Prozessgrößen eine zuständige Signiereinrichtung erreicht. Selbst, wenn eine Signiereinrichtung keine Rückmeldung, also keinen Antwortdatensatz an den Berichtsgenerator übermittelt, wird bevorzugt nach einer vordefinierten Zeit (Zeitintervall) dem ersten Datensatz eine weitere Signiereinrichtung zugeordnet. Die weitere Signiereinrichtung ist zwar nicht die erste Zuordnungswahl, sie kann aber in Bezug auf eine Stelle und/oder Person zugeordnet sein, die eine Mitverantwortung (Verantwortlichkeit) im Kontext des Auslösungsereignisses oder der Prozessgrößen aufweist.

In einer bevorzugten Ausführungsform ordnet der Berichtsgenerator den ersten Datensatz eine weitere Signiereinrichtung zu, wenn er in einem Zeitintervall von bevorzugt 1 min bis 48 h, stärker bevorzugt 10 min bis 24 h, besonders stark bevorzugt 15 min bis 5h insbesondere 30 min bis 2 h, keine Rückmeldung von der als erstes zugeordneten Signiereinrichtung erhält. Also wenn der Berichtsgenerator nach dem benannten Zeitintervall keinen Antwortdatensatz erhält. Das vordefinierte Zeitintervall ist bevorzugt an die Relevanz des Auslösungsereignisses und/oder der anlagenbezogene Prozessgrößen (neu) zu bestimmen bzw. zu variieren. Durch Verfahren der künstlichen Intelligenz können aus der Vielzahl der vorliegenden verknüpften Prozessgrößen, wie bereits beispielhaft mit dem fehlendem Mehl erläutert, zeitliche Vorgaben für eine Freigabe von alternativen Prozessschritten (in dem beispielhaften Fall die Freigabe von Reservemehl aus der Tiefkühlung) abgeleitet werden, die dann zu den jeweils passenden bevorzugten zugeordneten Zeitintervallen für eine erforderliche Rückmeldung einer Signiereinrichtung führen. Dadurch wird eine Information über das Auslösungsereignis und/oder die anlagenbezogenen Prozessgrößen in jedem Fall an eine zuständige Stelle und/oder Person geleitet, wobei vorteilhaft sichergestellt werden kann, dass diese Information auch wirklich gelesen/verarbeitet wurde. Es hat sich gezeigt, dass die so ermittelten, beschriebenen Zeitintervalle besonders gut für das erfindungsgemäße System geeignet sind.

In einer weiteren bevorzugten Ausführungsform ist das System dadurch gekennzeichnet, dass die Signaturanforderung abhängig vom Auslösungsereignis ist und/oder eine Anforderung ist in Bezug auf:
a) eine Signaturstufe, die eine Sicherheitsstufe umfasst und/oder
b) eine Signaturkette, die eine Erforderlichkeit einer Signatur von mindestens zweier Signiereinrichtungen umfasst.

Durch die Signaturanforderung kann der Berichtsgenerator in vorteilhafter Weise bereits eine entsprechende Vorgabe hinsichtlich der aus seiner Sicht mindestens erforderlichen Sicherheitsstufe der angeforderten Signatur machen, welche dann automatisch ohne weiteren Eingriff bzw. weitere diesbezügliche Eingaben der Signiereinrichtung (bzw. der zugeordneten Stellen und/oder Personen) verarbeitet werden kann. Hierdurch kann der Signaturprozess erheblich beschleunigt und vereinfacht werden. Dies ist in hohem Maße vorteilhaft für die Nutzerakzeptanz und Durchsetzung eines solchen Verfahrens in der rechtssicheren Dokumentation von gesundheits- und sicherheitsrelevanten Prozessereignissen in einer Anlage zur Verarbeitung von Lebensmitteln.

Grundsätzlich kann vorgesehen sein, dass die Signiereinrichtung sich gegebenenfalls auch über die Vorgabe des Berichtsgenerators hinwegsetzen kann, also auch einen Antwortdatensatz mit einer Signatur mit geringerer Sicherheitsstufe (als die vorgegebene Mindestsicherheitsstufe) erzeugen kann. Vorzugsweise ist jedoch vorgesehen, dass die Signiereinrichtung den Antwortdatensatz nur dann erzeugen kann, wenn über mindestens einen Teil des Anforderungsdatensatzes eine elektronische Signatur gemäß der Signaturvorgabe erzeugt wurde. Zusätzlich oder alternativ kann vorgesehen sein, dass der Antwortdatensatz dem Berichtsgenerator nur zu Verfügung gestellt wird, wenn über mindestens einen Teil des Anforderungsdatensatzes eine elektronische Signatur der Signiereinrichtung gemäß der Signaturvorgabe erzeugt wurde. Hiermit kann sichergestellt werden, dass unmittelbar erkannt wird, dass der Signaturprozess fehlgeschlagen ist.

In einer weiteren bevorzugten Ausführungsform kann der Berichtsgenerator ebenfalls als eine Signatureinrichtung ausgestaltet sein, sodass bei der Erstellung eines Anforderungsdatensatzes, dieser durch den Berichtsgenerator signiert wird. Der Berichtsgenerator wählt dabei für seine Signatur eine bevorzugte Sicherheitsstufe aus. Insbesondere muss diese nicht der angeforderten Sicherheitsstufe entsprechen. In weiteren bevorzugten Alternativen kann die Sicherheitsstufe der Berichtsgenerator-Signatur die angeforderte Sicherheitsstufe definieren. Dies kann insbesondere dann gelten, wenn der Berichtsgenerator keine abweichende Vorgabe hinsichtlich der angeforderten Sicherheitsstufe macht. Hiermit ist eine besonders schnelle und reibungslose Abwicklung möglich.

Im Sinne der Erfindung ist die Signaturstufe bevorzugt eine Sicherheitsstufe, wobei die Sicherheitsstufe bevorzugt die Art der Signatur definiert. Diese ist bevorzugt in die oben genannten drei Kategorien einzuteilen, nämlich "einfache elektronische Signatur", "fortgeschrittene elektronische Signatur" und "qualifizierte elektronische Signatur".

Eine Signaturkette ist bevorzugt als eine Signaturabfolge zu verstehen, in dem ein elektronisches Dokument bzw. ein erster Datensatz oder ein Anforderungsdatensatz zunächst von einer ersten Signiereinrichtung signiert wird und anschließend an eine weitere Signiereinrichtung (oder mehrere weitere Signiereinrichtung) geleitet wird, welche das elektronische Dokument bzw. den ersten Datensatz oder den Anforderungsdatensatz ebenfalls signieren und abschließend an den Berichtsgenerator als Antwortdatensatz übermitteln. Im Endeffekt ist die Anforderung an eine Signaturkette, bevorzugt eine Anforderung an eine mehrfache Signatur durch mehrere Signiereinrichtungen. Es kann bevorzugt sein, dass die Signiereinrichtung nach jeder Signatur einen Antwortdatensatz erzeugt und an den Berichtsgenerator übermittelt, welcher diesen Antwortdatensatz anschließend an eine oder mehrere weitere Signiereinrichtung weiterleitet. Die Signaturkette ermöglicht es, für überaus kritische Informationen mehrere verantwortliche Stellen/Personen gleichzeitig oder kurz hintereinander zu informieren. Darüber hinaus kann die Reaktion auf die kritischen Informationen durch die Signaturkette sicherer ausgestaltet sein, da zum Beispiel für einen Systemstopp zwei oder mehrere Signaturen nötig sind (Signatur einer Signiereinrichtung würde nicht ausreichen).

Der Unterschriftsprozess kann somit also mehrstufig sein, so dass z.B. je nach Schwere des Ereignisses neben dem fachlichen Verantwortlichen auch dessen Vorgesetzter mitunterschreiben muss. Weiterhin können auch unterschiedliche Signaturqualitäten, das sind unterschiedliche definierte Sicherheitslevel der Signaturen, gewählt werden, angefangen bei einer einfachen Information über eine "einfache elektronische Signatur" über eine "fortgeschrittene elektronische Signatur" weiter über eine "qualifizierte elektronische Signatur". Darüber hinaus sind auch Verzweigungen im Unterschriftslauf, Delegationen im Fall von Abwesenheit und auch Gruppenadressierungen möglich, bei denen vorgegeben werden kann, dass eine bestimmte Mindestanzahl an Personen aus einer Gruppe signieren muss.

In einer weiteren bevorzugten Ausführungsform ist das System dadurch gekennzeichnet, dass der Antwortdatensatz einen zweiten Datensatz umfasst, in welchem Daten umfasst sind, auf dessen Basis die Auditoreinrichtung eine Fortführung oder einen Abbruch über die Durchführung eines Prozesses der Arbeitsstation einleiten kann. Daraus ergibt sich vorteilhaft, dass auf besondere Vorkommnisse in der Anlage für die Verarbeitung von Lebensmitteln reagiert werden kann, wobei diese Reaktion von einem Ort eingeleitet wird, welcher von der Anlage entfernt ist. Die Ausgestaltung des Systems ermöglicht es, insbesondere sehr schnell zu reagieren. Weiterhin bietet ein solches System Vorteile in Bezug auf Effizienz und Kosteneffektivität, denn durch eine Anweisung und/oder Wartungen aus einer Ferne kann zum Beispiel auf Fahrtwege durch Personen verzichtet werden. Ferner können auch mehrere Anweisungen gleichzeitig an die Auditoreinrichtung erbracht werden.

In einer weiteren bevorzugten Ausführungsform ist das System dadurch gekennzeichnet, dass das System eine Aktionseinrichtung umfasst, wobei die Aktionseinrichtung dazu eingerichtet ist,
- den zweiten Datensatz zu erstellen und dem Antwortdatensatz hinzuzufügen und anschließend den Antwortdatensatz an die Auditoreinrichtung zu übermitteln
- wobei die Aktionseinrichtung in Datenverbindung mit dem Berichtsgenerator und/oder der Signiereinrichtung und/oder der Auditoreinrichtung steht.

Es können dadurch direkte Rückwirkungen auf das loT-System über den Berichtsgenerator oder die Aktionseinrichtung erfolgen, so kann z.B. bei sicherheitsrelevanten Vorkommnissen ein Systemstopp veranlasst werden. Das Aufweisen einer Aktionseinrichtung kann weiterhin zu einer erhöhten Sicherheit des Systems führen. Die Informationen mit Rückwirkungen auf die Anlage zur Verarbeitung von Lebensmitteln durch den zweiten Datensatz sollte unter strengen Auflagen durchgeführt werden. Die Aktionseinrichtung kann dabei als einzelne Systemkomponente besonders gut abgesichert und resistent gegenüber Manipulationen sein.

Bevorzugt weist der zweite Datensatz Daten im Kontext der Steuerung und/oder Regelung der Anlage zur Verarbeitung von Lebensmitteln, insbesondere der in der Anlage umfassten Arbeitsstationen, auf. Die Auditoreinrichtung ist dabei dazu konfiguriert, die im zweiten Datensatz umfassten Steuer- und/oder Regelbefehle umzusetzen und durchzuführen.

In einer bevorzugten Ausführungsform weist die Aktionseinrichtung Mittel zum Erzeugen, Verarbeiten, Speichern, Senden und Empfangen von Daten auf. In diesem Bezug erhält die Aktionseinrichtung einen Antwortdatensatz einer Signiereinrichtung und kann dem Antwortdatensatz einen zweiten Datensatz hinzufügen. Die Aktionseinrichtung und die Signiereinrichtung können bevorzugt auf einem gemeinsamen Endgerät umfasst sein oder aber stärker bevorzugt voneinander separiert als eigenständige Vorrichtungen vorliegen. Es ist zudem bevorzugt, dass der Antwortdatensatz mit einer Signatur zur Aktionseinrichtung übermittelt wird. Die Aktionseinrichtung ist dabei in der Lage die Signatur auszulesen oder zu verifizieren. Anschließend fügt sie dem Antwortdatensatz einen zweiten Datensatz zu und übermittelt den Antwortdatensatz in direkter Weise an die Auditoreinrichtung und/oder den Berichtsgenerator. Weiterhin kann bevorzugt sein, dass der Antwortdatensatz, den die Aktionseinrichtung von der Signiereinrichtung erhält, noch keine Signatur umfasst, sodass die Aktionseinrichtung den Antwortdatensatz nach dem Hinzufügen des zweiten Datensatzes an die Signiereinrichtung zurück übermittelt. Diese wiederum würde erst anschließend dem Antwortdatensatz eine Signatur beifügen und an den Berichtsgenerator übermitteln.

In einer bevorzugten Ausführungsform erstellt die Aktionseinrichtung einen zweiten Datensatz auf Grundlage von Eingabedaten einer verantwortlichen Person/Stelle. In diesem Kontext weist die Aktionseinrichtung bevorzugt Mittel auf, mit welchen eine verantwortliche Person/Stelle eine Eingabe mit einem Befehl generieren kann. In einer bevorzugten Alternative hingegen erzeugt die Aktionseinrichtung eine zweiten Datensatz bevorzugt automatisch unter Zuhilfenahme von Algorithmen der künstlichen Intelligenz.

In einer weiteren bevorzugten Ausführungsform ist das System dadurch gekennzeichnet, dass der Berichtsgenerator auf einem Server vorliegt und/oder der Berichtsgenerator Auswertungsanwendungen umfasst, wobei die Auswertungsanwendungen dazu eingerichtet sind die im ersten Datensatz umfassten Informationswerte und/oder aufgenommenen Prozessgrößen zu analysieren. Die Auswertungsanwendungen ermöglichen es vorteilhaft, die Relevanz der Informationswerte und/oder aufgenommenen Prozessgrößen zu erkennen und daraus resultierend die bestmögliche Signiereinrichtung dem ersten Datensatz zuzuordnen. Besonders stark bevorzugt weisen die Auswertungsanwendungen Algorithmen der künstlichen Intelligenz auf. Wie schon geschildert, sind auch Vorteile damit verbunden, wenn der Berichtsgenerator auf einem Server vorliegt. So können sich zum Beispiel mehrere Systeme einen Berichtsgenerator teilen. Der Berichtsgenerator kann aus der Ferne gewartet und eingestellt werden. Weiterhin führt eine solche Anordnung des Berichtsgenerators auf einem Server dazu, dass in der Anlage für die Verarbeitung von Lebensmitteln selbst, der Berichtsgenerator nicht umfasst sein muss, sodass dies wiederum keinen Platz in der Anlage einnimmt.

In einer weiteren bevorzugten Ausführungsform ist das System dadurch gekennzeichnet, dass die Übermittlung des Anforderungsdatensatzes, Antwortdatensatzes, ersten Datensatzes und/oder zweiten Datensatzes als ein Datenübertragungsprozess über eine IP-basierte Kommunikation erfolgt, wobei mindestens ein Datenübertragungsprozess durch ein Sicherheitsmodul kryptographisch abgesichert durchgeführt wird. Dies führt besonders vorteilhaft zu einer manipulationssicheren Dokumentation aller Unterschrifts- und Informationsvorgänge.

Die IP-basierte Kommunikation erfolgt bevorzugt durch Internetprotokolle, also Protokolle der Netzwerkkommunikation. Die Übertragung von Daten über Protokolle der Netzwerkkommunikation ermöglicht vorteilhaft eine Übertragung von großen Datenmengen, sodass unter Umständen dadurch sogar auch die Liveübertragung von Video und detaillierte Fotofolgen ermöglicht werden. Weiterhin ermöglicht eine derartige Übertragung eine Steuerung aus der Ferne von Komponenten wie Kamera und/oder Mikrofon. Vorliegend sind die Protokolle ausgesucht aus der Gruppe umfassend, https, http POST, SIP, SFTP, FTP, SMTP.

In einer bevorzugten Ausführungsform wird das "http POST" - Protokoll als Übertragungsprotokoll verwendet. In diesem Zusammenhang werden der erste Datensatz und/oder der Anforderungsdatensatz und/oder der Antwortdatensatz als sogenannter Playload (Nutzlast) mittels "http POST" übermittelt. Der Vorteil von "http POST" ist, dass die Entitäten nicht damit belastet werden, eine Verbindung über eine längere Zeit halten zu müssen. Weiterhin ist "http POST" in simpler Weise ohne große Anforderungen in das erfindungsgemäße System zu implementieren und insbesondere überaus benutzerfreundlich.

In einer weiteren bevorzugten Ausführungsform wird das "SFTP" - Protokoll als Übertragungsprotokoll verwendet. Ein wesentlicher Vorteil von "SFTP" ist der, dass die Kommunikation verschlüsselt erfolgt. Somit können Angreifer den Datenverkehr nicht ohne Weiteres einsehen. Die Verschlüsselung wird nicht von "SFTP" selbst, sondern dem darunterliegenden Kommunikationskanal bereitgestellt, weshalb verschiedene Methoden genutzt werden können. Neben dem Kopieren von Dateien in beide Richtungen - von einem Client auf einen Server und umgekehrt - können per "SFTP" auch Verzeichnisse ausgelesen und aufgelistet sowie Dateien auf dem Server vom Client aus gelöscht werden.

In einer weiteren bevorzugten Ausführungsform ist bei der Übertragung von Daten mittels eines "SFTP"-Protokolls bevorzugt zwischen den einzelnen Systemkomponenten, also der Auditoreinrichtung, der Aktionseinrichtung und/oder dem Berichtsgenerator vorzugsweise ein SFTP-Server zwischengeschaltet. In dieser bevorzugten Variante werden zwischen einer ersten Systemkomponente und dem SFTP-Server SFTP-Files ausgetauscht, wobei der SFTP-Server diese Files dann wandelt und der zweiten Systemkomponente über ein "http POST"-Protokoll zur Verfügung stellt.

Überdies ist das vorgeschlagene System durch den bevorzugten Einsatz eines Sicherheitsmoduls, welches alle Datenübertragungsprozesse kryptografisch abgesichert durchführt, vorteilhaft besonders sicher gegenüber Datenmanipulation, Datendiebstahl und/oder Datenverlust. Bevorzugt ist das Sicherheitsmodul als ein HSM ausgestaltet. Es ist im Sinne der Erfindung bevorzugt, dass das HSM ein hardwarebasiertes, kryptografisches Modul darstellt, das vorzugsweise eine FIPS-140-2-Zertifizierung aufweist. Durch die Vorsehung der mit FIPS-Zertifizierung arbeitenden Auditoreinrichtung, Berichtsgenerator, Aktionseinrichtung und/oder Signiereinrichtung wird insbesondere ein technisches Problem mit technischen Mitteln gelöst, nämlich die Bereitstellung einer besonders sicheren Datenübertragung innerhalb des Systems. Das HSM kann von einem Einzelchipmodul, einem autonomen Multichipmodul oder einem eingebetteten Multichipmodul gebildet werden oder ein solches umfassen. Das HSM ist vorzugsweise dazu eingerichtet, Daten besonders sicher zu speichern. Insbesondere ist ein HSM dazu in der Lage, kritische Sicherheitsparameter, wie Passwörter, vertrauliche Daten oder Schlüssel zur Verschlüsselung von Daten zu generieren, zu speichern, zu nutzen und/oder zu pflegen. Die Schlüssel können beispielsweise symmetrisch oder asymmetrisch sein. Vorteilhafterweise können HSM als kryptografische Coprozessoren eingesetzt werden. In bevorzugten Ausführungsformen kann ein HSM eine batteriebetriebene Schaltung und/oder eine Spannungsüberwachung aufweisen. Dadurch wird insbesondere die Integration oder Vorsehung einer Echtzeituhr zur korrekten Zeiterfassung und Zeitstempelung ermöglicht, wodurch beispielsweise gewährleistet werden kann, dass abgelaufene Schlüssel nicht länger genutzt werden können. Darüber hinaus kann ein HSM einen redundanten Speicher umfassen, der beispielsweise dafür genutzt werden kann, mehrere Technologien zur Erzeugung einer zusätzlichen Datensicherheit gleichzeitig zu verwenden. Insbesondere kann mit Hilfe des HSM eine Public-Key-Infrastruktur auf höchstem Niveau realisiert werden, wie sie dem Fachmann bekannt ist.

Dadurch, dass die Systemkomponenten bevorzugt mit einem Sicherheitsmodul ausgestattet sind, können alle Datenübertragungsprozesse kryptografisch abgesichert durchgeführt werden. Besonders vorteilhaft wird das System dadurch widerstandsfähig gegen Manipulation und unbefugtes Lesen der Daten.

Es ist im Sinne der Erfindung, dass ein HSM eine Kette von Zertifikaten umfasst, die vorzugsweise vor Inbetriebnahme des HSM auf die Vorrichtung geladen werden. Das HSM ist darüber hinaus dazu eingerichtet, eigene private und öffentliche Geräteschlüssel zu erzeugen. Vorzugsweise verlässt der private Schlüssel zu keinem Zeitpunkt das HSM, während der öffentliche Schlüssel nach außen abgegeben werden kann, zum Beispiel an einen dezentralen Server zur dortigen Signierung. Im Gegenzug kann das HSM ein personalisiertes, signiertes Gerätezertifikat erhalten, mit dem das HSM die Sicherheit in einem Internet of Things-System (IOT) deutlich erhöhen kann. Das HSM kann dann vom dezentralen Server als "echte" Sicherheitseinrichtung erkannt und authentifiziert werden, was insbesondere durch die Vergabe einer eindeutigen Kennung ermöglicht wird. Auf diese Weise lassen sich besonders unkompliziert authentifizierte TLS-Verbindungen herstellen (Transport Layer Security).

In einer weiteren bevorzugten Ausführungsform ist das System dadurch gekennzeichnet, dass der erste und/oder zweite Datensatz Daten aufweist ausgesucht aus der Gruppe umfassend Standortdaten, personenbezogene Daten, zeitbezogene Daten, Audiodaten, Bilddaten, Analysedaten, Prozessdaten, Verwendungsdaten, Textdaten und/oder Videodaten,
- wobei der Informationswert über ein Auslösungsereignis in einem ersten Datensatz eine qualitätsbezogene und/oder quantitätsbezogene Information über das Auslösungsereignis und/oder eine Handlungsoption für eine Reaktion auf das Auslösungsereignis umfasst;
- wobei der zweite Datensatz einen Informationswert über eine Handlung umfasst, wobei die Handlung eine Kenntnisnahme, Freigabe und/oder Abbruch über die Durchführung eines Prozesses der Arbeitsstation aufweist.

Die aufgelisteten Daten können weitreichende Informationen über die Anlage zur Verarbeitung von Lebensmitteln umfassen, sodass daraus weitere Informationen, wie ein Auslösungsereignis, abgeleitet werden können. Neben der Erkennung eines Auslösungsereignisses sind die Daten auch zur Überwachung von Prozessen und/oder von Arbeitsstationen als solche geeignet.

Eine qualitätsbezogene Information über ein Auslösungsereignis umfasst bevorzugt eine Information über die Art, die Schwere, die Tragweite und/oder die Relevanz über ein eingetretenes Ereignis.

Eine qualitätsbezogene Information über eine Handlungsoption ist bevorzugt eine Information, welche zum Beispiel die Art einer Reaktion bzw. Handlung auf das Auslösungsereignis vorschlägt. So kann eine Handlungsoption beispielsweise der Vorschlag des Einsatzes eines Technikers, einer Lieferung eines Lebensmittels und/oder einen Einsatz einer Rettungseinheit (bspw. Feuerwehr) umfassen. Eine Information über eine Handlungsoption ermöglicht der Signiereinrichtung bzw. ihrer zugeordneten verantwortlichen Stelle und/oder Person ein oder mehrere Vorschläge für ein weiteres Vorgehen insbesondere eine Reaktion anzubieten. Die Handlungsoptionen sind bevorzugt derart ausgereift, dass ihnen ohne weitere Überlegungen oder Berechnungen Folge geleistet werden kann und die Signiereinrichtung und/oder die Aktionseinrichtung bevorzugt einen Befehl (Antwortdatensatz und/oder zweiter Datensatz) generieren, welche eine Handlung ausgesucht aus diesen Handlungsoption umfasst.

Eine quantitätsbezogene Information hingegen umfasst bevorzugt eine Information über eine Anzahl von Ereignissen und/oder Kosten. Entsprechend weist eine quantitätsbezogene Information über eine Handlungsoption eine Information über mengenmäßige und oder zahlenmäßige Merkmale auf.

In einer weiteren bevorzugten Ausführungsform ist das System dadurch gekennzeichnet, dass die Arbeitsstation ausgesucht ist aus der Gruppe umfassend: Kühleinrichtung, Gareinrichtung, Lagereinrichtung, Analyseeinrichtung, Kennzeichnungseinrichtung, Klimaeinrichtung, Verarbeitungseinrichtung, Veränderungseinrichtung, Transporteinrichtung, Reinigungseinrichtung, Wasserzuführeinrichtung, Absaugeinrichtungen, Entsorgungseinrichtung. Insbesondere die vorgenannten Arbeitsstationen finden sich in einer Anlage zur Verarbeitung von Lebensmitteln und bedürfen einer Überwachung, denn diese sind essenziell für die Verarbeitung, bevorzugt Zubereitung, von Lebensmitteln. Die erfindungsgemäße Arbeitsstation ist nicht auf die in der erwähnten Gruppe umfassten Arbeitsstationen beschränkt.

In einer weiteren bevorzugten Ausführungsform ist das System dadurch gekennzeichnet, dass die Arbeitsstation anlagenbezogene Prozessgrößen generiert, welche ausgesucht sind aus der Gruppe umfassend Kühl- oder Gartemperaturen, Lagermengen, Lagerzeit, Wassermenge, Abfallmenge, Luftfeuchtigkeit, Gewicht, Kühl- oder Garzeit, Verarbeitungszeit, Liefermenge, Luftpartikelmenge, Luftqualität, Analyse- und /oder Identifikationswerte der verarbeiteten Stoffe. Insbesondere die Kombination der vorgenannten Prozessgrößen können ein umfassendes Bild der Anlage zur Verarbeitung von Lebensmitteln erzeugen. Es versteht sich, dass die Erfindung nicht auf diese Aufzählung der Prozessgrößen beschränkt ist.

In einer weiteren bevorzugten Ausführungsform ist das System dadurch gekennzeichnet, dass die Analyse der aufgenommenen Prozessgrößen über Algorithmen der künstlichen Intelligenz erfolgt. Die Nutzung von künstlicher Intelligenz (kurz: KI) zur Analyse von Daten führt zu bedeutenden Vorteilen gegenüber einer Analyse durch herkömmliche (computerimplementierte) Verfahren und/oder auch gegenüber einer manuellen Analyse durch einen menschlichen Beobachter. So kann eine KI vorteilhaft überaus große Datenmengen in einer sehr kurzen Zeit automatisiert analysieren. Ferner können die Algorithmen der künstlichen Intelligenz Muster und/oder Merkmale in einer Datenmenge erkennen, die von einem Menschen oder herkömmlichen Algorithmen nicht erkannt werden. Dies führt insbesondere dazu, dass die KI eintretende Auslösungsereignisse frühzeitig (zeitlich weit vor dem eigentlichen Auftreten des Auslösungsereignisses) erkennen kann.

In einer weiteren bevorzugten Ausführungsform umfassen die Algorithmen der künstlichen Intelligenz bevorzugt Machine Learning Algorithmen. Es versteht sich, dass Machine Learning Algorithmen ein Teilbereich der künstlichen Intelligenz (*Artificial Intelligence*) sind. Machine Learning nutzt dabei mathematische und statistische Modelle, um aus Datenbeständen zu "lernen". Im Allgemeinen haben Machine Learning Algorithmen den Vorteil, dass Informationen, die für einen menschlichen Beobachter zu komplex sind, automatisch aus einem großen Datensatz extrahiert werden können. Es gibt eine Vielzahl von Machine Learning Algorithmen, die sich im Wesentlichen in drei unterschiedliche Lernverfahren unterscheiden lassen: Supervised Learning, Unsupervised Learning und Reinforcement Learning.

Besonders bevorzugt werden erfindungsgemäß Verfahren des Supervised Learning für die Analyse der aufgenommenen anlagenbezogenen Prozessgrößen genutzt. Beim Supervised Learning Verfahren wird zunächst ein sogenannter Trainingsprozess durchgeführt. Hierbei werden Trainingsdaten in Form von Eingabedaten zusammen mit den entsprechenden Zieldaten bereitgestellt. Der Zweck eines Trainings ist allgemein in Machine Learning Verfahren, Parameter einer Funktion so anzupassen, dass die Funktion anschließend in der Lage ist, den Zielwert mit hoher Genauigkeit von dem entsprechenden Eingabewert zu bestimmen. Die angepasste Funktion wird dann nach dem Trainingsprozess zur Vorhersage von Zieldaten für zuvor nicht sichtbare Eingabedaten verwendet. Die Funktion wird dabei durch ein mathematisches und/oder statistisches Modell beschrieben.

In einer bevorzugten Ausführungsform wird hierbei die Funktion durch Support Vektor Machine, Bayes Netze und/oder Entscheidungsbäume ausgestaltet. Besonders bevorzugt wird die Funktion durch ein künstliches neuronales Netz beschrieben. Hierbei können die künstlichen neuronalen Netze erfindungsgemäß verschiedene Architekturen aufweisen und bspw. als Deep Feed Forward (DFF) Network, Recurrent Neural Network (RNN), Deep Convolutional Network (DCN), Deconvolutinal Network (DN), Convolutional Neural Network (CNN), Deep Residual Network (DRN), Boltzmann-Maschine, Time Delay Neural Networks (TDNNs) ausgebildet sein.

Im Sinne der Erfindung sind die Eingabedaten bevorzugt durch die anlagenbezogenen Prozessgrößen definiert, nämlich bevorzugt Kühl- oder Gartemperaturen, Lagermengen, Lagerzeit, Wassermenge, Abfallmenge, Luftfeuchtigkeit, Gewicht, Kühl- oder Garzeit, Verarbeitungszeit, Liefermenge, Luftpartikelmenge, Luftqualität, Analyse- und /oder Identifikationswerte der verarbeiteten Stoffe (ohne auf diese beschränkt zu sein).

Erfindungsgemäß sind Zieldaten bevorzugt durch die Einordnung der Eingabedaten in eine bestimmte Klasse definiert und/oder es wird aufgrund der Eingabedaten das Auftreten von spezifischen Zieldaten (Ereignissen) bestimmt. Ebenso können auch Wahrscheinlichkeiten für die Zugehörigkeit in eine bestimmte Klasse als Zieldaten oder Wahrscheinlichkeiten für ein Auftreten von spezifischen Zieldaten (Ereignissen) ausgegeben werden. Bevorzugt sind die Klassen in bestimmte Auslösungsereignisse unterteilt. Zum Beispiel: "Ausfall eines Kühlaggregats"; "Brand der Anlage"; "Überhitzung der Lebensmittel in Garprozessen"; "Keine Lagerkapazitäten"; "unbefugte Personen haben sich Zutritt zum Lager beschaffen". Die KI kann demnach als sogenannter Klassifikationsalgorithmus anhand der Zuordnung der Eingabedaten in entsprechende Zieldaten ausgeben, ob ein bestimmtes Auslösungsereignis eintrifft.

Ebenso bevorzugt kann für einen Machine Learning Algorithmus als Input (Eingabedaten) das in einem vorherigen Schritt ermittelte Auslösungsereignis verwendet werden. Entsprechend kann der Machine Learning Algorithmus als Output (Zieldaten) eine für das Auslösungsereignis zuständige Signiereinrichtung ermitteln.

In einer weiteren bevorzugten Ausführungsform wird das Verfahren des Unsupervised Learning für die Analyse oder Verarbeitung der anlagenbezogenen Prozessgrößen genutzt. Beim Unsupervised Learning versucht der Algorithmus in den Eingabedaten Muster zu erkennen, die von einem strukturlosen Rauschen abweichen. Die Funktion im Trainingsprozess orientiert sich dabei nur an den Ähnlichkeiten der Eingabedaten und passt ihre Parameter dementsprechend an, sodass keine Ausgabedaten für den Trainingsprozess verwendet werden.

In einer bevorzugten Ausführungsform werden anhand des Unsupervised Learning Verfahrens Segmentierungen bzw. Clustering der Eingabedaten oder aber auch bevorzugt Komprimierungen der Eingabedaten durchgeführt. Dem Fachmann sind die Begriffe Clustering, Segmentierung und Komprimierung im Zusammenhang mit Machine Learning Verfahren bekannt.

In einer bevorzugten Ausführungsform umfasst der Unsupervised Learning Algorithmus bevorzugt die Hauptkomponentenanalyse (Principal Component Analysis (PCA)) und/oder den K-Means-Algorithmus und/oder mindestens ein neuronales Netz.

Das vorgeschlagene System weist weiterhin bevorzugt Algorithmen der künstlichen Intelligenz mit Unsupervised Learning Verfahren auf. In diesem Zusammenhang kann eine Datenmenge von aufgenommenen anlagenbezogenen Prozessgrößen über Verfahren des Unsupervised Learning vorbearbeitet werden, indem zum Beispiel relevante Daten gruppiert (geclustert) werden, um anschließend ausgehend von diesen "gefilterten" Daten einen Klassifikationsalgorithmus zur Ermittlung eines Auslösungsereignisses und/oder einer Signiereinrichtung zu erhalten.

Wie schon beschrieben werden in beiden oben benannten Verfahren in einem ersten Schritt sogenannte Trainingsprozesse zum Ermitteln von optimalen Parametern einer o.g. Machine Learning Funktion durchgeführt. Anhand der angepassten Funktion werden nach dem Training verschiedene Aussagen für vorher unbekannte Eingabedaten getätigt.

In einer weiteren bevorzugten Variante wird das Verfahren des Reinforcement Learning für die Analyse oder Verarbeitung der Auditierungsinformation genutzt. Beim Reinforcement Learning (Lernen durch Verstärkung) Verfahren findet hingegen der Trainingsprozess kontinuierlich auch nach Anpassung der Parameter einer Funktion statt. Über "Trial and Error" werden Auswirkungen verschiedener Aussagen anhand der angepassten Funktion für bisher unbekannte Eingabedaten beobachtet und bewertet. Als Reaktion auf diese Aussagen erhält der Algorithmus ein Feedback, abstrakt dargestellt in Form einer Belohnung oder Bestrafung. Woraufhin der Algorithmus die Funktion anhand ihrer Parameter weiter optimiert. Dementsprechend passt der Algorithmus die Funktion des Machine Learning Verfahrens kontinuierlich an bzw. verändert diesen.

In einer bevorzugten Ausführungsform umfasst das Verfahren des Reinforcement Learning die Q-Learning Methode und/oder o.g. neuronale Netze und/oder weitere neuronale Netze sowie weitere für den Fachmann bekannte Algorithmen.

In einer weiteren bevorzugten Ausführungsform betrifft die Erfindung ein Verfahren zur rechtssicheren Dokumentation von gesundheits- und sicherheitsrelevanten Prozessereignissen in einer Anlage zur Verarbeitung von Lebensmitteln umfassend die nachfolgenden Schritte:
a. Automatisierte Aufnahme anlagenbezogener Prozessgrößen durch eine Erfassungseinrichtung
b. Erkennung eines Auslösungsereignisses durch eine Auditoreinrichtung;
c. Übermittelung eines ersten Datensatzes an einen Berichtsgenerator, wobei der Datensatz mindestens eine der aufgenommenen Prozessgrößen und/oder einen Informationswert über das Auslösungsereignis umfasst;
d. Ermittlung einer für den ersten Datensatz zuständigen Signiereinrichtung auf Basis des im Datensatz umfassten Informationswertes über das Auslösungsereignisses und/oder auf Basis einer im ersten Datensatz umfassten Prozessgröße und/oder auf Basis einer Auswertung der erhaltenen Informationswerte und/oder Prozessgrößen;
e. Übermittelung eines Anforderungsdatensatzes an die dem ersten Datensatz zugeordnete ersten Signiereinrichtung durch den Berichtsgenerator, wobei der Anforderungsdatensatz eine Signaturanforderung und mindestens einen Teil des ersten Datensatzes umfasst;
f. Erzeugung eines Antwortdatensatzes durch die Signiereinrichtung, wobei der Antwortdatensatz eine elektronische Signatur über mindestens einen Teil des Anforderungsdatensatzes umfasst

Die Kombination der vorliegenden Verfahrensschritte führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinanderstehen. Ein wichtiger Vorteil des erfindungsgemäßen Verfahrens ist die Erforderlichkeit von äußerst wenigen Verfahrensschritten und Systemkomponenten, wobei trotzdem eine überaus sichere Infrastruktur zur rechtssicheren Dokumentation von gesundheits- und sicherheitsrelevanten Prozessereignissen in einer Anlage zur Verarbeitung von Lebensmitteln generiert wird.

Ein Fachmann erkennt, dass die im Zusammenhang mit dem erfindungsgemäßen System erörterten Vorteile, technischen Effekte und bevorzugten Ausführungsformen analog für das erfindungsgemäße Verfahren zur rechtssicheren Dokumentation von gesundheits- und sicherheitsrelevanten Prozessereignissen in einer Anlage zur Verarbeitung von Lebensmitteln, gelten, welches sich das erfindungsgemäße System zu Nutze macht. Ebenfalls sind alle Vorteile, technischen Effekte und bevorzugten Ausführungsformen, welche im Kontext des Verfahrens beschrieben werden, auf das System übertragbar.

In einer weiteren bevorzugten Ausführungsform ist das Verfahren dadurch gekennzeichnet, dass der Antwortdatensatz an den Berichtsgenerator und/oder eine weitere Signiereinrichtung und/oder eine Aktionseinrichtung übermittelt wird, wobei die weitere Signiereinrichtung dem Anforderungsdatensatz eine weitere elektronische Signatur hinzufügt und/oder die Aktionseinrichtung einen zweiten Datensatz erstellt und dem Antwortdatensatz hinzufügt. Dies ermöglicht vorteilhaft die Anwendung einer Signaturkette, die eine erhöhte Sicherheit an eine Signatur gewährleistet, denn in bestimmten Fällen kann ein Prozess in der Anlage für die Verarbeitung von Lebensmitteln beispielsweise nur fortgeführt oder abgebrochen werden, wenn mehrere Signiereinrichtungen die Informationen über ein Auslösungsereignis erhalten und signiert haben.

In einer weiteren bevorzugten Ausführungsform ist das Verfahren dadurch gekennzeichnet, dass der Berichtsgenerator bei einer fehlenden Übermittlung des Antwortdatensatzes nach einem festgelegten Zeitintervall, dem ersten Datensatz eine weitere Signiereinrichtung zuordnet. Dies stellt vorteilhaft sicher, dass die Information über ein Auslösungsereignis und/oder die Prozessgrößen als solche eine Signiereinrichtung erreichen, obwohl eine erste zuständige Signiereinrichtung unter Umständen verhindert (bspw. durch Stromausfall) ist.

In einer weiteren bevorzugten Ausführungsform ist das Verfahren dadurch gekennzeichnet, dass die Auditoreinrichtung einen Abbruch eines Prozesses aufgrund der in dem zweiten Datensatz umfassten Daten einleitet. Dadurch, dass die Auditoreinrichtung bevorzugt einen Abbruch von Prozessen initiieren kann, wird eine Steuerung bzw. eine Regelung der Anlage für die Verarbeitung von Lebensmitteln vorteilhaft aus einer Ferne ermöglicht.

In einer weiteren bevorzugten Ausführungsform ist das Verfahren dadurch gekennzeichnet, dass die anlagenbezogenen Prozessgrößen und/oder Informationswerte über Algorithmen der künstlichen Intelligenz analysiert werden, wobei das Auslösungsereignis erkannt wird und/oder eine Handlungsoption auf das Auslösungsereignis ermittelt wird. Die Verwendung von künstlicher Intelligenz im erfindungsgemäßen Verfahren führt zu einer Optimierung von Prozessen und einem Wegfall repetitiver Aufgaben, sodass die Effizienz durch gezielteren und damit nachhaltigeren Einsatz von Ressourcen, Zeiteinsparung und Minimierung der Verschwendung gesteigert werden kann.

### FIGUREN

Im Folgenden soll die Erfindung anhand von Figuren näher erläutert werden, ohne auf diese beschränkt zu sein.

### Kurzbeschreibunq der Abbildungen

- **Fig. 1**: Schematische Darstellung einer bevorzugten Anordnung des erfindungsgemäßen Systems
- **Fig. 2**: Schematisch dargestellter Ablauf einer bevorzugten Ausführungsform des erfindungsgemäßen Verfahrens

### Detaillierte Beschreibung der Abbildungen

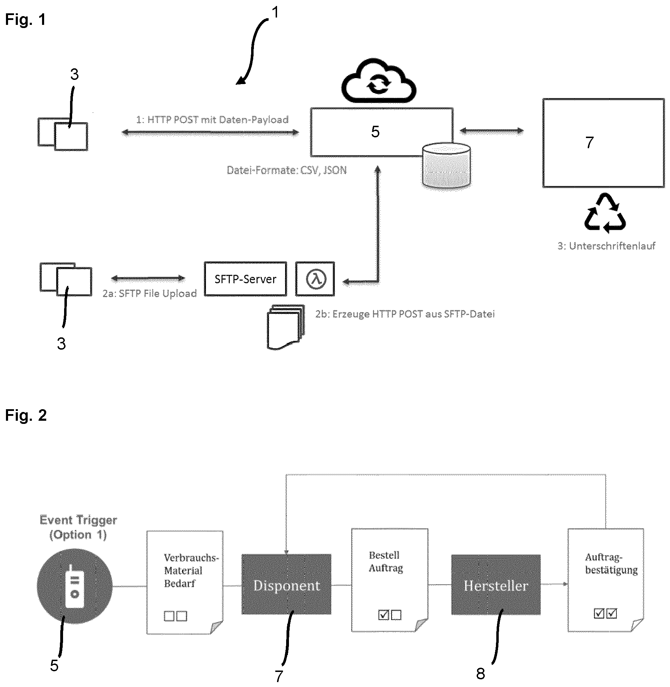

**Fig. 1** illustriert eine bevorzugte Anordnung von Systemkomponenten für ein System **1** zur rechtssicheren Dokumentation von gesundheits- und sicherheitsrelevanten Prozessereignissen. Das System **1** umfasst bevorzugt eine Arbeitsstation, eine Erfassungseinrichtung, eine Auditoreinrichtung **3,** einen Berichtsgenerator **5** und eine Signiereinrichtung **7.** Die Erfassungseinrichtung ist bevorzugt der Arbeitsstation zugeordnet und erfasst bevorzugt automatisiert anlagenbezogene Prozessgrößen. Diese werden bevorzugt an die Auditoreinrichtung **3** übermittelt, welche die aufgenommenen Prozessgrößen analysiert und ein Auslösungsereignis erkennt. In einem ersten Szenario kann die Auditoreinrichtung **3** bevorzugt einen ersten Datensatz erzeugen, und diesen an den Berichtsgenerator **5** über eine direkte Anbindung übermitteln. Vorzugsweise liegt der Berichtsgenerator **5** auf einem Server vor. Die Übertragung der Daten an den Berichtsgenerator **5** erfolgt dabei bevorzugt über das Netzwerkprotokoll "http POST", wobei die relevanten Daten bevorzugt in einem CSV oder JSON Dateiformat als Nutzlast übermittelt werden. In einem zweiten alternativen Szenario ist zwischen dem Berichtsgenerator **5** und der Auditoreinrichtung **3** bevorzugt ein SFTP-Server zwischengeschaltet. Die Auditoreinrichtung **3** führt dabei bevorzugt einen SFTP-File Upload auf den SFTP-Server durch, wobei die Files bzw. Dateien einen ersten Datensatz mit relevanten Informationen über das Auslösungsereignis und/oder die Prozessgrößen an sich umfassen. Der SFTP-Server kann bevorzugt die SFTP-Datei in ein CSV oder JSON Dateiformat wandeln und diese mittels Netzwerkprotokoll "http POST" als Nutzlast an den Berichtsgenerator **5** übermitteln. Der Berichtsgenerator **5** ist bevorzugt dazu eingerichtet, den erhaltenen Dateien bzw.

Informationen eine zuständige Signiereinrichtung **7** zuzuordnen. Hierbei weist der Berichtsgenerator **5** bevorzugt eine Datenbank mit den Adressierungsinformationen aller Signiereinrichtungen **7** auf. Nach einer Zuordnung wird bevorzugt ein Anforderungsdatensatz durch den Berichtsgenerator **5** erstellt, welcher eine Anforderung über eine Signaturstufe und Signaturkette aufweist. Die Signiereinrichtung **7** ist bevorzugt dazu eingerichtet, einen Antwortdatensatz zu erzeugen, welcher eine elektronische Signatur über mindestens einen Teil des Anforderungsdatensatzes umfasst. Anschließend wird der Antwortdatensatz bevorzugt dem Berichtsgenerator **5** übermittelt. Der Berichtsgenerator **5** kann diesen bevorzugt speichern, sodass die Signatur dokumentiert wird und/oder der Berichtsgenerator **5** leitet den Antwortdatensatz weiter zur Auditoreinrichtung **3,** sodass diese eine Bestätigung über die Kenntnisnahme ihrer ausgesendeten Informationen durch verantwortliche Stellen erhält. Bevorzugt kann dies über die direkte Anbindung zwischen Berichtsgenerator **5** und Auditoreinrichtung **3** oder mit einem zwischengeschalteten es SFTP-Server geschehen.

**Fig. 2** zeigt eine bevorzugte Ausführungsform des erfindungsgemäßen Verfahrens in einer schematischen Ablaufdarstellung. Bevorzugt bekommt der Berichtsgenerator **5** dabei - wie schon in **Fig. 1** erläutert - eine Information über ein Auslösungsereignis anhand eines ersten Datensatzes von einer Auditoreinrichtung **3** (nicht in **Fig. 2** dargestellt) übermittelt. Der Berichtsgenerator **5** ermittelt anschließend bevorzugt eine zuständige Signiereinrichtung **7** (hier Disponent) und ordnet ihr den ersten Datensatz zu. Weiterhin erstellt der Berichtsgenerator **5** bevorzugt einen Anforderungsdatensatz mit einer Anforderung an eine Signaturstufe und Signaturkette und übermittelt diesen Anforderungsdatensatz an die zugeordnete Signiereinrichtung **7.** Im vorliegenden Fall fordert die Signaturkette, die Signatur von zwei Signiereinrichtungen **7,8** an. Die Signiereinrichtung **7** erstellt bevorzugt nach Erhalt des Anforderungsdatensatzes einen Antwortdatensatz, wobei der Antwortdatensatz eine elektronische Signatur über mindestens einen Teil des Anforderungsdatensatzes umfasst. Abschließend übermittelt die Signiereinrichtung **7** den Antwortdatensatz an eine weitere Signiereinrichtung **8** (hier: Hersteller). Die weitere Signiereinrichtung **8** erstellt ebenfalls einen

Antwortdatensatz mit einer elektronischen Signatur über mindestens einen Teil des Anforderungsdatensatzes.

### BEZUGSZEICHENLISTE

- **1**: System zur rechtssicheren Dokumentation von gesundheits- und sicherheitsrelevanten Prozessereignissen
- **3**: Auditoreinrichtung
- **5**: Berichtsgenerator
- **7**: Signiereinrichtung
- **8**: weitere Signiereinrichtung

## Patentansprüche

1. System (1) zur rechtssicheren Dokumentation von gesundheits- und sicherheitsrelevanten Prozessereignissen in einer Anlage zur Verarbeitung von Lebensmitteln, wobei das System mindestens eine Arbeitsstation, eine Erfassungseinrichtung, eine Auditoreinrichtung (3), einen Berichtsgenerator (5) und eine Signiereinrichtung (7) umfasst,
**dadurch gekennzeichnet, dass**
a) die Erfassungseinrichtung der Arbeitsstation zugeordnet ist und dazu eingerichtet ist, anlagenbezogene Prozessgrößen automatisiert aufzunehmen;
b) die Auditoreinrichtung (3) dazu eingerichtet ist,
(i) die aufgenommenen Prozessgrößen zu analysieren und ein Auslösungsereignis zu erkennen;
(ii) einen ersten Datensatz zu generieren, wobei der erste Datensatz mindestens eine der aufgenommenen Prozessgrößen und/oder einen Informationswert über das Auslösungsereignis umfasst;
(iii) den ersten Datensatz an den Berichtsgenerator zu übermitteln;
c) der Berichtsgenerator (5) dazu eingerichtet ist,
(i) eine für den ersten Datensatz zuständige Signiereinrichtung zu ermitteln, wobei die zuständige Signiereinrichtung auf Basis des im Datensatz umfassten Informationswertes über das Auslösungsereignis und/oder auf Basis einer im ersten Datensatz umfassten Prozessgröße und/oder auf Basis einer Auswertung der erhaltenen Informationswerte und/oder Prozessgrößen ermittelt wird;
(ii) einen Anforderungsdatensatz an die dem ersten Datensatz zugeordnete Signiereinrichtung zu übermitteln, wobei der Anforderungsdatensatz eine Signaturanforderung und mindestens einen Teil des ersten Datensatzes umfasst;
d) die Signiereinrichtung (7) dazu eingerichtet ist,
(i) einen Antwortdatensatz zu erzeugen, der eine elektronische Signatur über mindestens einen Teil des Anforderungsdatensatzes umfasst.

2. System (1) nach Anspruch 1
**dadurch gekennzeichnet, dass**
der Berichtgenerator (5) dazu eingerichtet ist,
- den Antwortdatensatz an die Auditoreinrichtung (3) und/oder an eine weitere Signiereinrichtung (8) zu übermitteln und/oder den Antwortdatensatz sowie den Anforderungsdatensatz zu speichern;
- bei einer fehlenden Rückmeldung durch einen Antwortdatensatz, nach einem definierten Zeitintervall dem ersten Datensatz eine weitere Signiereinrichtung (8) zuzuordnen.

3. System (1) nach einem oder beiden der vorhergehenden Ansprüche
**dadurch gekennzeichnet, dass**
die Signaturanforderung abhängig vom Auslösungsereignis ist und/oder eine Anforderung ist in Bezug auf:
a) eine Signaturstufe, die eine Sicherheitsstufe umfasst und/oder
b) eine Signaturkette, die eine Erforderlichkeit einer Signatur von mindestens zweier Signiereinrichtungen umfasst.

4. System (1) nach einem oder mehreren der vorhergehenden Ansprüche
**dadurch gekennzeichnet, dass**
der Antwortdatensatz einen zweiten Datensatz umfasst, in welchem Daten umfasst sind, auf dessen Basis die Auditoreinrichtung (3) eine Fortführung oder einen Abbruch über die Durchführung eines Prozesses der Arbeitsstation einleiten kann, wobei bevorzugt.
das System (1) eine Aktionseinrichtung umfasst, wobei die Aktionseinrichtung dazu eingerichtet ist,
- den zweiten Datensatz zu erstellen und dem Antwortdatensatz hinzuzufügen und anschließend den Antwortdatensatz an die Auditoreinrichtung (3) zu übermitteln
- wobei die Aktionseinrichtung in Datenverbindung mit dem Berichtsgenerator (5) und/oder der Signiereinrichtung (7) und/oder der Auditoreinrichtung (3) steht.

5. System (1) nach einem oder mehreren der vorhergehenden Ansprüche
**dadurch gekennzeichnet, dass**
der Berichtgenerator (5) auf einem Server vorliegt und/oder der Berichtsgenerator (5) Auswertungsanwendungen umfasst, wobei die Auswertungsanwendungen dazu eingerichtet sind die im ersten Datensatz umfassten Informationswerte und/oder aufgenommenen Prozessgrößen zu analysieren.

6. System (1) nach einem oder mehreren der vorhergehenden Ansprüche
**dadurch gekennzeichnet, dass**
die Übermittlung des Anforderungsdatensatzes, Antwortdatensatzes, ersten Datensatzes und/oder zweiten Datensatzes als ein Datenübertragungsprozess über eine IP-basierte Kommunikation erfolgt, wobei mindestens ein Datenübertragungsprozess durch ein Sicherheitsmodul kryptographisch abgesichert durchgeführt wird.

7. System (1) nach einem oder mehreren der vorhergehenden Ansprüche
**dadurch gekennzeichnet, dass**
der erste und/oder zweite Datensatz Daten aufweist ausgesucht aus der Gruppe umfassend Standortdaten, personenbezogene Daten, zeitbezogene Daten, Audiodaten, Bilddaten, Analysedaten, Prozessdaten, Verwendungsdaten, Textdaten und/oder Videodaten,
- wobei der Informationswert über ein Auslösungsereignisses in einem ersten Datensatz eine qualitätsbezogene und/oder quantitätsbezogene Information über das Auslösungsereignis und/oder eine Handlungsoption für eine Reaktion auf das Auslösungsereignis umfasst;
- wobei der zweite Datensatz einen Informationswert über eine Handlung umfasst, wobei die Handlung eine Kenntnisnahme, Freigabe und/oder Abbruch über die Durchführung eines Prozesses der Arbeitsstation aufweist.

8. System (1) nach einem oder mehreren der vorhergehenden Ansprüche
**dadurch gekennzeichnet, dass**
die Arbeitsstation ausgesucht ist aus der Gruppe umfassend: Kühleinrichtung, Gareinrichtung, Lagereinrichtung, Analyseinrichtung, Veränderungseinrichtung, Kennzeichnungseinrichtung, Klimaeinrichtung, Verarbeitungseinrichtung, Transporteinrichtung, Reinigungseinrichtung, Wasserzuführeinrichtung, Absaugeinrichtungen, Entsorgungseinrichtung.

9. System (1) nach einem oder mehreren der vorhergehenden Ansprüche
**dadurch gekennzeichnet, dass**
die Arbeitsstation anlagenbezogene Prozessgrößen generiert, welche ausgesucht sind aus der Gruppe umfassend Kühl- oder Gartemperaturen, Lagermengen, Lagerzeit, Wassermenge, Abfallmenge, Luftfeuchtigkeit, Gewicht, Kühl- oder Garzeit, Verarbeitungszeit, Liefermenge, Luftpartikelmenge, Luftqualität, Analyse- und /oder Identifikationswerte der verarbeiteten Stoffe.

10. System (1) nach einem oder mehreren der vorhergehenden Ansprüche
**dadurch gekennzeichnet, dass**
die Analyse der aufgenommenen Prozessgrößen über Algorithmen der künstlichen Intelligenz erfolgt.

11. Verfahren zur rechtssicheren Dokumentation von gesundheits- und sicherheitsrelevanten Prozessereignissen in einer Anlage zur Verarbeitung von Lebensmitteln umfassend die nachfolgenden Schritte:
a. Automatisierte Aufnahme anlagenbezogener Prozessgrößen durch eine Erfassungseinrichtung
b. Erkennung eines Auslösungsereignisses durch eine Auditoreinrichtung (3);
c. Übermittelung eines ersten Datensatzes an einen Berichtsgenerator (5), wobei der Datensatz mindestens eine der aufgenommenen Prozessgrößen und/oder einen Informationswert über das Auslösungsereignis umfasst;
d. Ermittlung einer für den ersten Datensatz zuständigen Signiereinrichtung (7) auf Basis des im Datensatz umfassten Informationswertes über das Auslösungsereignisses und/oder auf Basis einer im ersten Datensatz umfassten Prozessgröße und/oder auf Basis einer Auswertung der erhaltenen Informationswerte und/oder Prozessgrößen;
e. Übermittelung eines Anforderungsdatensatzes an die dem ersten Datensatz zugeordnete ersten Signiereinrichtung (7) durch den Berichtsgenerator (5), wobei der Anforderungsdatensatz eine Signaturanforderung und mindestens einen Teil des ersten Datensatzes umfasst;
f. Erzeugung eines Antwortdatensatzes durch die Signiereinrichtung (7), wobei der Antwortdatensatz eine elektronische Signatur über mindestens einen Teil des Anforderungsdatensatzes umfasst

12. Verfahren nach Anspruch 11
**dadurch gekennzeichnet, dass**
der Antwortdatensatz an den Berichtsgenerator (5) und/oder eine weitere Signiereinrichtung (8) und/oder eine Aktionseinrichtung übermittelt wird, wobei die weitere Signiereinrichtung (8) dem Anforderungssatz eine weitere elektronische Signatur hinzufügt und/oder die Aktionseinrichtung einen zweiten Datensatz erstellt und dem Antwortdatensatz hinzufügt.

13. Verfahren nach einem oder mehreren der vorhergehenden Ansprüche 11 - 12
**dadurch gekennzeichnet, dass**
der Berichtgenerator (5) bei einer fehlenden Übermittlung des Antwortdatensatzes nach einem festgelegten Zeitintervall, dem ersten Datensatz eine weitere Signiereinrichtung (8) zuordnet.

14. Verfahren nach einem oder mehreren der vorhergehenden Ansprüche 11 - 13
**dadurch gekennzeichnet, dass**
die Auditoreinrichtung (3) einen Abbruch eines Prozesses aufgrund der in dem zweiten Datensatz umfassten Daten einleitet.

15. Verfahren nach einem oder mehreren der vorhergehenden Ansprüche 11 - 14
**dadurch gekennzeichnet, dass**
die anlagenbezogenen Prozessgrößen und/oder Informationswerte über Algorithmen der künstlichen Intelligenz analysiert werden, wobei das Auslösungsereignis erkannt wird und/oder eine Handlungsoption auf das Auslösungsereignis ermittelt wird.
